# EUROPÄISCHE PATENTANMELDUNG

(11) **EP 0 769 815 A2**
(43) Veröffentlichungstag der Anmeldung: **23.04.1997**
(21) Anmeldenummer: 96115896.1
(22) Anmeldetag: 04.10.1996
(51) Int. Cl.: H01L 27/02

(54) **Schaltungsanordnung mit einem Schutzmittel**

(30) Priorität: 20.10.1995 DE 19539079
(71) Anmelder: TEMIC TELEFUNKEN microelectronic GmbH, 74072 Heilbronn (DE)
(72) Erfinder: Gutsch, Henrik, Dr., 74081 Heilbronn (DE); Häfner, Horst, 74080 Heilbronn (DE); Hammel, Hermann, 74585 Rot am See (DE); Schmidt, Friedemann, 70499 Stuttgart (DE); Schnabel, Jürgen, 74211 Leingarten (DE)
(74) Vertreter: Maute, Hans-Jürgen, Dipl.-Ing.

(57) **Zusammenfassung**

Eine integrierte Schaltungsanordnung weist zum Schutz gegen Schädigungen durch elektrostatische Entladungen mindestens einen Schaltungsanschluß auf, der über jeweils eine von zwei Dioden mit einer ersten und einer zweiten Versorgungsleitung verbunden ist. Die Dioden sind dabei in Sperrichtung geschaltet, d. h. eine von ihnen wird dann leitend, wenn am Schaltungsanschluß ein Potential anliegt, das größer oder kleiner als die an den Versorgungsleitungen anliegenden Versorgungspotentiale ist. Die Schaltungsanordnung weist eine Überspannungsunterdrückungseinheit auf, über die die beiden Versorgungsleitungen miteinander verbunden sind. Die Überspannungseinheit ist durch einen steilen Anstieg einer zwischen den Versorgungsleitungen anliegenden Versorgungsspannung in einen niederohmigen Zustand schaltbar, so daß ein dem Anstieg der Versorgungsspannung entgegenwirkender Entladestrom über die Überspannungsunterdrückungseinheit von einer der Versorgungsleitungen zur anderen Versorgungsleitung fließt und die Entladungsenergie in der Überspannungsunterdrückungseinheit in Wärme umgesetzt wird.

## Beschreibung

Die Erfindung betrifft eine Schaltungsanordnung gemäß dem Oberbegriff des Patentanspruchs 1.

Eine integrierte Schaltungsanordnung kann durch einen Entladestrom, der während einer elektrostatischen Entladung durch einen Schaltungsanschluß der Schaltungsanordnung fließt, zerstört werden. Um die Schaltungsanordnung gegen derartige Schädigungen zu schützen, werden zumindest einige ihrer Schaltungsanschlüsse üblicherweise über jeweils eine in Sperrichtung geschaltete Diode mit einer ersten und mit einer Zweiten Versorgungsleitung, zwischen denen eine Versorgungsspannung anliegt, verbunden. An der ersten Versorgungsleitung liegt dabei ein erstes Versorgungspotential und an der Zweiten Versorgungsleitung ein zweites Versorgungspotential an. Im Falle einer elektrostatischen Entladung wird einem dieser Schaltungsanschlüsse ein Potential zugeführt, das entweder größer oder kleiner als die beiden Versorgungspotentiale ist. Hierdurch wird eine der mit diesem Schaltungsanschluß verbundenen Dioden in Durchlaßrichtung vorgespannt, so daß ein Entladestrom vom Schaltungsanschluß über diese Diode zur jeweiligen Versorgungsleitung abfließt. Dabei wird ein Teil der Energie der elektrostatischen Entladung, d.h. ein Teil der Entladungsengerie, in der Diode in Wärme umgesetzt.

Derartige Dioden bieten jedoch nur einen geringen Schutz gegen elektrostatische Entladung, da der Entladestrom über die Versorgungsleitungen zu der Schaltungsanordnung fließen und dort empfindliche Schaltungsteile zerstören kann.

Der Erfindung liegt daher die Aufgabe zugrunde, eine Schaltungsanordnung gemäß dem Oberbegriff des Patentanspruchs 1 anzugeben, die in hohem Maße unempfindlich gegen elektrostatische Entladungen ist, die sicher funktioniert und die kostengünstig integrierbar ist.

Die Aufgabe wird durch die kennzeichnenden Merkmale des Patentanspruchs 1 gelöst. Vorteilhafte Weiterbildungen und Ausgestaltungen ergeben sich aus den Unteransprüchen.

Die erfindungsgemäße Schaltungsanordnung weist mindestens eine Überspannungsunterdrückungseinheit auf, die an die erste und an die zweite Versorgungsleitung angeschlossen ist. Die Überspannungunterdrückungseinheitseinheit ist über die zwischen den Versorgungsleitungen anliegende Versorgungsspannung in einen niederohmigen Zustand schaltbar. Sie wird dabei dann in den niederohmigen Zustand geschaltet, wenn die Versorgungsspannung aufgrund des während einer elektrostatischen Entladung durch eine der Dioden fließenden Entladestromes mit großer Steilheit auf einen neuen Wert ansteigt. Sie wird vorzugsweise auch dann in den niederohmigen Zustand geschaltet, wenn die Versorgungsspannung eine bestimmte Schwellenspannung überschreitet. Die Überspannungsunterdrückungseinheit weist hierzu einen Schwellwertdetektor auf, mit dem die Versorgungsspannung überwacht wird. Der Entladestrom fließt demnach durch die Überspannungsunterdrückungseinheit von der einen der beiden Versorgungsleitungen zur anderen Versorgungsleitung ab, so daß die Entladungsenergie in der Überspannungsunterdrückungseinheit in Wärme umgesetzt wird. Der Entladestrom wirkt dabei dem weiteren Anstieg der Versorgungsspannung entgegen.

Da die Überspannungsunterdrückungseinheit bei einem steilen Anstieg der Versorgungsspannung schon während dieses Anstiegs, d. h. noch vor der Überschreitung der Schwellenspannung, in den niederohmigen Zustand geschaltet wird, wird schon frühzeitig eine Begrenzung der Versorgungsspannung auf für die Schaltungsanordnung zulässige Werte vorgenommen. Durch diese rechtzeitig getroffene Maßnahme wird verhindert, daß während der elektrostatischen Entladung an den Versorgungsleitungen Spannungsspitzen auftreten, die für die Schaltungsanordnung schädlich sind.

Die Überspannungsunterdrückungseinheit weist vorzugsweise einen Ableittransistor auf, der sich im Normalbetrieb in einem sperrenden, d. h. hochohmigen Zustand befindet und über den die Versorgungsleitungen miteinander verbunden sind. Die Überspannungsunterdrückungseinheit weist desweiteren ein mit den Versorgungsleitungen verbundenes erstes Differenzierglied auf, das zur Ansteuerung des Ableittransistors vorgesehen ist, und das bei einem Anstieg der Versorgungsspannung den Ableittransistor in einen leitenden, d. h. niederohmigen Zustand schaltet. Dieser Schaltvorgang kann durch ein in der Überspannungsunterdrückungseinheit vorgesehenes zweites Differenzierglied beschleunigt werden.

Ein Differenzierglied weist dabei vorzugsweise eine mit den Versorgungsleitungen verbundene Reihenschaltung aus einem Kondensator und einem Widerstand sowie einen Verstärkertransistor auf, der durch eine am Widerstand anliegende Spannung gesteuert wird und durch den der Ableittransistor in den leitenden bzw. sperrenden Zustand geschaltet wird.

Die Überspannungsunterdrückungseinheit ist aufgrund des geringen Schaltungsaufwands und aufgrund des durch die geringe Anzahl von Bauelementen bedingten geringen Flächenbedarfs - für mehrere Schaltungsanschlüsse der Schaltungsanordnung wird nur eine Überspannungsunterdrückungseinheit benötigt - kostengünstig integrierbar. Sie bietet dabei besonders hohen Schutz gegen elektrostatische Entladungen, da in ihr bereits während des durch die elektrostatische Entladung bedingten Anstieg der Versorgungsspannung, so viel Entladungsenergie in Wärme umgesetzt wird, daß die Versorgungsspannung die Schwellenspannung - den maximal zulässigen Wert - nicht überschreitet.

Die Erfindung wird im folgenden anhand der Figur näher beschrieben. Es Zeigen dabei
- Figur 1: eine Prinzipdarstellung eines Ausschnitts einer integrierten Schaltung mit einer Überspannungsunterdrückungseinheit und
- Figur 2: ein Schaltbild als Ausführungsbeispiel einer Überspannungsunterdrückungseinheit aus Figur 1.

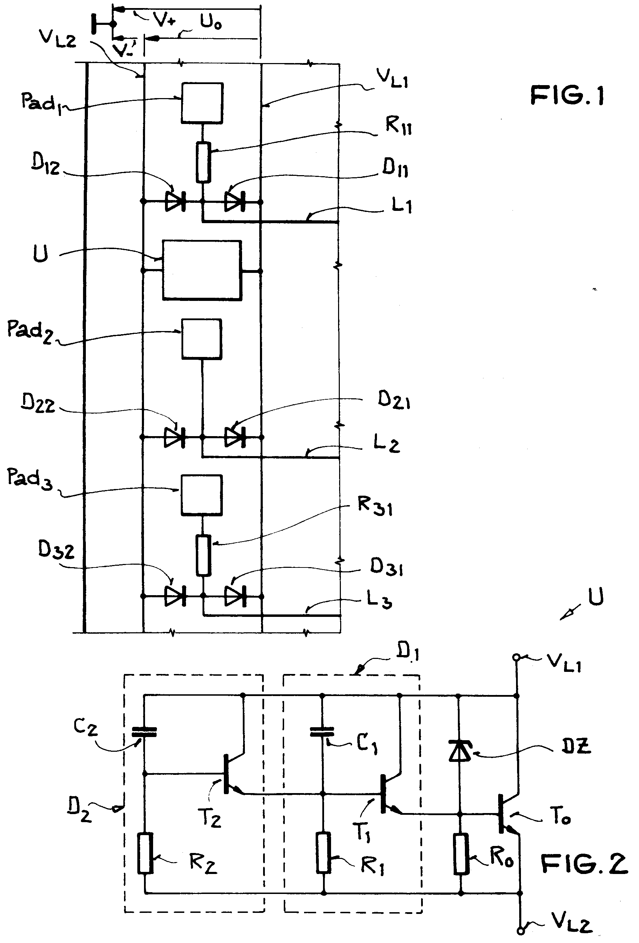

Gemäß Figur 1 sind die als Bondpads ausgeführten Schaltungsanschlüsse Pad₁ ... Pad₃ entweder direkt oder über Vorwiderstände R₁₁, R₃₁ mit jeweils einer der Signalleitungen L₁ bzw. L₂ bzw. L₃ verbunden, über welche Signale von den Schaltungsanschlüssen Pad₁ ... Pad₃ zur Schaltungsanordnung oder von der Schaltungsanordnung zu den Schaltungsanschlüssen Pad₁ ... Pad₃ geführt werden. Die Signalleitungen L₁ ... L₃ sind möglichst nahe an den jeweiligen Schaltungsanschlüssen Pad₁ ... Pad₃ über jeweils eine der Dioden D₁₁ ... D₃₂ mit der ersten Versorgungsleitung V_{L1} und der zweiten Versorgungsleitung V_{L2} verbunden. Die Dioden D₁₁ ... D₃₂ sind dabei derart geschaltet, daß sie im Normalbetrieb sperren, wobei als Normalbetrieb der Fall bezeichnet wird, bei dem die Potentiale an den Schaltungsanschlüssen Pad₁ ... Pad₃ zwischen dem an der ersten Versorgungsleitung V_{L1} anliegenden ersten Versorgungspotential V₊ und dem an der zweiten Versorgungsleitung V_{L2} anliegenden zweiten Versorgungspotential V₋ liegen. Da im vorliegenden Beispiel das erste Versorgungspotential V₊ um die Versorgungsspannung U₀ größer als das zweite Versorgungspotential V₋ ist, wobei das zweite Versorgungspotential V₋ beispielsweise ein Massepotential ist, sind die Dioden D₁₁, D₂₁, D₃₁ jeweils mit ihren Kathoden an die erste Versorgungsleitung V_{L1} und die Dioden D₁₂, D₂₂, D₃₂ jeweils mit ihren Anoden an die zweite Versorgungsleitung V_{L2} angeschlossen. Die Anode der Diode D₁₁ bzw. D₂₁ bzw. D₃₁ ist dabei mit der Kathode der Diode D₁₂ bzw. D₂₂ bzw. D₃₂ und mit der Signalleitung L₁ bzw. L₂ bzw. L₃ verbunden. Die erste Versorgungsleitung V_{L1} ist über die Überspannungsunterdrückungseinheit U, die im Normalbetrieb hochohmig und im Falle einer elektrostatischen Entladung niederohmig ist, mit der zweiten Versorgungsleitung V_{L2} verbunden.

Die Überspannungsunterdrückungseinheit U umfaßt gemäß Figur 2 den Ableittransistor T₀, der als großflächiger npn-Transistor ausgeführt ist, den als Z-Diode DZ ausgeführten Schwellwertdetektor, den Ableitwiderstand R₀ für Leckströme, das erste Differenzierglied D₁ mit dem als npn-Transistor ausgeführten ersten Verstärkertransistor T₁, mit dem ersten Kondensator C₁ und mit dem ersten Widerstand R₁ sowie das zweite Differenzierglied D₂ mit dem als npn-Transistor ausgeführten zweiten Verstärkertransistor T₂, mit dem zweiten Kondensator C₂ und mit dem zweiten Widerstand R₂ auf. Die erste Versorgungsleitung V_{L1} ist mit dem Kollektor des Ableittransistors T₀, mit der Kathode der Z-Diode DZ, mit dem Kollektor des ersten Verstärkertransistors T₁, mit dem Kollektor des zweiten Verstärkertransistors T₂ und mit den beiden Kondensatoren C₁, C₂ verbunden. Die zweite Versorgungsleitung V_{L2} ist mit dem Emitter des Ableittransistors T₀, mit dem Ableitwiderstand R₀ und mit dem ersten und zweiten Widerstand R₁, R₂ verbunden. Die Basis des Ableittransistors T₀ ist mit der Anode der Z-Diode DZ, mit dem Emitter des ersten Verstärkertransistors T₁ und über den Ableitwiderstand R₀ mit der zweiten Versorgungsleitung V_{L2} verbunden; die Basis des ersten Verstärkertransistors T₁ ist mit dem Emitter des zweiten Verstärkertransistors T₂, über den ersten Kondensator C₁ mit der ersten Versorgungsleitung V_{L1} und über den ersten Widerstand R₁ mit der zweiten Versorgungsleitung V_{L2} verbunden; die Basis des zweiten Verstärkertransistors T₂ ist über den zweiten Kondensator C₂ mit der ersten Versorgungsleitung V_{L1} und über den zweiten Widerstand R₂ mit der zweiten Versorgungsleitung V_{L2} verbunden.

Bei einer elektrostatischen Entladung wird einem der Schaltungsanschlüsse Pad₁ ... Pad₃ ein Potential zugeführt, das größer als das erste Versorgungspotential V₊ oder kleiner als das zweite Versorgungspotential V₋ ist. Wenn das Potential an einen der Schaltungsanschlüsse Pad₁ ... Pad₃ größer als das erste Versorgungspotential V₊ ist, wird diejenige der Dioden D₁₁, D₂₁, D₃₁, die mit diesem Schaltungsanschluß Pad₁ bzw. Pad₂ bzw. Pad₃ und mit der ersten Versorgungsleitung V_{L1} verbunden ist, leitend. Wenn hingegen das Potential an einem der Schaltungsanschlüsse Pad₁ ... Pad₃ kleiner als das zweite Versorgungspotential V₋ ist, wird diejenige der Dioden D₁₁, D₂₂, D₃₂, die mit diesem Schaltungsanschluß Pad₁ bzw. Pad₂ bzw. Pad₃ und mit der zweiten Versorgungsleitung V_{L2} verbunden ist, leitend.

Der Entladestrom der dabei durch die leitende Diode D₁₁ bzw. ... D₃₂ fließt, bewirkt einen Anstieg der zwischen den Versorgungsleitungen V_{L1}, V_{L2} anliegenden Versorgungsspannung U₀. Falls dieser Anstieg mit so großer Steilheit erfolgt, daß das Basispotential des ersten oder zweiten Verstärkertransistors T₁, T₂ um mindestens eine Basis-Emitter-Flußspannung ansteigt, wird der erste Verstärkertransistor T₁ bzw. werden beide Verstärkertransistoren T₁, T₂ hierdurch in den leitenden Zustand geschaltet. Dem Ableittransistor T₀ wird demzufolge ein Basisstrom zugeführt, so daß dieser ebenfalls in den leitenden Zustand geschaltet wird. Der dann durch den Ableittransistor T₀ fließende Entladestrom wirkt dem weiteren Anstieg der Versorgungsspannung U₀ entgegen.

Die beiden Verstärkertransistoren T₁, T₂ und der Ableittransistor T₀ bilden zusammen eine dreistufige Darlington-Anordnung mit hoher Stromverstärkung. Der Ableittransistor T₀ wird demzufolge innerhalb kürzester Zeit in den niederohmigen Zustand geschaltet und kann in diesem Zustand einen großen Entladestrom aufnehmen.

Die Z-Diode DZ wird sobald die Versorgungsspannung U₀ eine bestimmte von der Z-Diode DZ abhängige Schwellenspannung überschreitet, leitend. Der Ableittransistor T₀ erhält dann über die Z-Diode DZ einen Basisstrom und wird hierdurch in den leitenden Zustand geschaltet. Durch den Entladestrom, der dann durch den Ableittransistor T₀ fließt, wird die Versorgungsspannung U₀ auf einen Wert begrenzt, der kleiner als die Schwellenspannung ist.

Die Anode der Z-Diode DZ kann alternativ auch an die Basis des ersten oder zweiten Verstärkertransistors T₁, T₂ angeschlossen sein. In diesem Fall wird der Ableittransistor T₀ nicht direkt über die Z-Diode DZ, sondern über den ersten bzw. zweiten Verstärkertransistor T₁ bzw. T₂ in den leitenden Zustand geschaltet. Die Anode der Z-Diode DZ kann auch direkt an die zweite Versorgungsleitung angeschlossen sein. Sie muß dann jedoch den gesamten durch die Überspannungsunterdrückungseinheit U fließenden Entladestrom aufnehmen und demzufolge entsprechend groß dimensioniert sein.

Bei einem steilen und großen Anstieg der Versorgungsspannung U₀ wird die Überspannungsunterdrückungseinheit U folglich durch zwei Mechanismen in den niederohmigen Zustand geschaltet. Der eine Mechanismus - die Begrenzung durch die steil ansteigende Versorgungsspannung U₀ - und der andere Mechanismus - die Begrenzung durch die die Schwellenspannung überschreitende Versorgungsspannung U₀ - ergänzen sich dabei gegenseitig.

## Patentansprüche

1. Schaltungsanordnung mit zwei Versorgungsleitungen (VL₁, VL₂), zwischen denen eine Versorgungsspannung (U₀) anliegt, und mit mindestens einem Schaltungsanschluß (Pad₁ ... Pad₃) welcher zum Schutz der Schaltungsanordnung gegen Schädigungen durch elektrostatische Entladungen über jeweils eine in Sperrichtung geschaltene Diode (D₁₁ ... D₃₂) mit der ersten und der zweiten Versorgungsleitung (V_{L1}, V_{L2}) verbunden ist, dadurch gekennzeichnet, daß die Schaltungsanordnung mindestens eine Überspannungsunterdrückungseinheit (U) aufweist, über die die beiden Versorgungsleitungen (V_{L1}, V_{L2}) miteinander verbunden sind und daß die Überspannungsunterdrückungseinheit (U) durch einen steilen Anstieg einer zwischen den beiden Versorgungsleitungen (V_{L1}, V_{L2}) anliegenden Versorgungsspannung (U₀) in einen niederohmigen Zustand schaltbar ist und dadurch dem Anstieg der Versorgungsspannung (U₀) entgegenwirkt.

2. Schaltungsanordnung nach Anspruch 1, dadurch gekennzeichnet, daß die Überspannungsunterdrückungseinheit (U) einen Schwellwertdetektor (DZ) aufweist, durch den die Überspannungsunterdrückungseinheit (U) dann in den niederohmigen Zustand schaltbar ist, wenn die Versorgungsspannung (U₀) eine bestimmte Schwellenspannung überschreitet.

3. Schaltungsanordnung nach Anspruch 1 oder 2, dadurch gekennzeichnet, daß die Überspannungsunterdrückungseinheit (U) einen Ableittransistor (T₀) und zur Ansteuerung des Ableittransistors (T₀) ein erstes Differenzierglied (D₁) aufweist, wobei die erste Versorgungsleitung (V_{L1}) über den Ableittransistor (T₀) und über das erste Differenzierglied (D₁) mit der zweiten Versorgungsleitung (V_{L2}) verbunden ist und der Ableittransistor (T₀) bei einem steilen Anstieg der Versorgungsspannung (U₀) durch das erste Differenzierglied (D₁) in einen leitenden Zustand schaltbar ist.

4. Schaltungsanordnung nach Anspruch 3, dadurch gekennzeichnet, daß der Ableittransistor (T₀) als Bipolartransistor ausgeführt ist und daß das erste Differenzierglied (D₁) einen ersten Kondensator (C₁), einen ersten Widerstand (R₁) und einen als Bipolartransistor ausgeführten ersten Verstärkertransistor (T₁) aufweist, wobei die erste Versorgungsleitung (V_{L1}) mit dem Kollektor des Ableittransistors (T₀), mit dem Kollektor des ersten Verstärkertransistors (T₁) und über den ersten Kondensator (C₁) mit der Basis des ersten Verstär kertransistors (T₁) verbunden ist, die zweite Versorgungsleitung (V_{L2}) mit dem Emitter des Ableittransistors (T₀) und über den ersten Widerstand (R₁) mit der Basis des ersten Verstärkertransistors (T₁) verbunden ist und der Emitter des ersten Verstärkertransistors (T₁) mit der Basis des Ableittransistors (T₀) verbunden ist.

5. Schaltungsanordnung nach Anspruch 4, dadurch gekennzeichnet, daß die Überspannungsunterdrückungseinheit (U) ein zweites Differenzierglied (D₂) aus einem zweiten Kondensator (C₂), aus einem zweiten Widerstand (R₂) und aus einem als Bipolartransistor ausgeführten zweiten Verstärkertransistor (T₂) aufweist, dessen Kollektor mit der ersten Versorgungsleitung (V_{L1}) verbunden ist, dessen Basis über den zweiten Kondensator (C₂) mit der ersten Versorgungsleitung (V_{L1}) und über den zweiten Widerstand (R₂) mit der zweiten Versorgungsleitung (V_{L2}) verbunden ist und dessen Emitter mit der Basis des ersten Verstärkertransistors (T₁) verbunden ist.

6. Schaltungsanordnung nach einem der Ansprüche 4 oder 5, dadurch gekennzeichnet, daß der Schwellwertdetektor (DZ) als Z-Diode ausgeführt ist, deren Kathode mit der ersten Versorgungsleitung (V_{L1}) verbunden ist und deren Anode mit der Basis eines der Transistoren (T₀, T₁, T₂) der Schaltungsanordnung oder mit der zweiten Versorgungsleitung (V_{L2}) verbunden ist.

7. Schaltungsanordnung nach einem der Ansprüche 4 bis 6, dadurch gekennzeichnet, daß die Basis und der Emitter des Ableittransistors (T₀) über einen Ableitwiderstand (R₀) miteinander verbunden sind.
